# EUROPEAN PATENT APPLICATION

(11) **EP 4 198 171 A1**
(43) Date of publication of application: **21.06.2023**
(21) Application number: 21214674.0
(22) Date of filing: 15.12.2021
(51) Int. Cl.: C25B 1/04, C25B 15/023

(54) **METHOD FOR OPERATING A POWER-TO-GAS CONVERTER WITH A WIND TURBINE, POWER-TO-GAS CONVERTER AND WIND TURBINE**

(71) Applicant: Siemens Gamesa Renewable Energy A/S, 7330 Brande (DK)
(72) Inventor: Hoegh, Gustav, 7100 Vejle (DK)
(74) Representative: SGRE-Association

(57) **Abstract**

The invention relates to a method for operating a power-to-gas converter (20) with a wind turbine(10), the power-to-gas converter (20) being electrically connected to the wind turbine (10), wherein the power-to-gas converter (20) generates at least one gas-mixture (GM), wherein a measuring unit (30) of the power-to-gas converter (20) measures a concentration (C) of at least one gas (G) in the gas-mixture (GM), wherein a control unit (40) of the power-to-gas converter (20) controls the generation of the at least one gas-mixture (GM) by the power-to-gas converter (20), wherein a first threshold value (TG) of the concentration (C) of the at least one gas (G) in the gas-mixture (GM) is set within the control unit (40), wherein the generation of the at least one gas-mixture (GM) is stopped by the control unit (40) when the measured concentration (C) of the at least one gas (G) in the gas-mixture (GM) reaches or exceeds the first threshold value (TG). Furthermore, the invention relates to a power-to-gas converter (20) and a wind turbine (10).

## Description

The invention relates to a method for operating a power-to-gas converter with a wind turbine, a power-to-gas converter and a wind turbine.

The conversion of power to gas might produce unwanted byproducts and/or disadvantages circumstances. For example, the electrolysis of water produces Hydrogen and Oxygen and a certain amount of gasses crossover e.g., hydrogen crossover into oxygen. At a level above approximately 4 %, the gas-mixture becomes explosive, which is to be avoided.

The gas-mixture produced by a power-to-gas converter depends on the current density of the provided energy to the power-to-gas converter. The known data imposes a lower limit for a power-to-gas converter current at which the power-to-gas converter can safely be operated. As a consequence, this limits the lowest amount of power the power-to-gas converter can absorb in order to be operated safely.

In combination with a wind turbine configuration without grid, this means that when the turbine is producing low power due to low wind speed, the power-to-gas converter current may become too low, and the wind turbine and/or the power-to-gas converter must be stopped. If a fixed minimum current limit is used, this means that the turbine production is stopped below a certain power level in order to operate the power-to-gas converter in a safe state. This minimum limit might be chosen conservatively to ensure that an acceptable mixture ratio of the produced gas-mixture is never exceeded, no matter the current operational environment, the age of the cells, tolerances for the components, temperature- and/or pressure-conditions. This results in lost production of gas at low wind speeds.

Accordingly, it is an object of the invention to provide a method for operating a power-to-gas converter with a wind turbine, a power-to-gas converter and a wind turbine, that overcome at least some of the aforementioned disadvantages in a convenient and cost-efficient way.

This object is solved by the subject-matter of the claims. In particular, the object is solved by a method for operating a power-to-gas converter with a wind turbine according to claim 1, a power-to-gas converter according to claim 8 and a wind turbine according to claim 11. Further details of the invention unfold from the other claims as well as the description and the drawings. Thereby, the features and details described in connection with the method for operating a power-to-gas converter with a wind turbine, the power-to-gas converter and the wind turbine of the invention may be applied in connection with each other so that regarding the disclosure of the individual aspects of the invention it is or can be referred to one another.

According to a first aspect of the invention, the above-mentioned object is solved by a method for operating a power-to-gas converter with a wind turbine. The power-to-gas converter is electrically connected to the wind turbine, wherein the power-to-gas converter generates at least one gas-mixture, wherein a measuring unit of the power-to-gas converter measures a concentration of at least one gas in the gas-mixture. The method of the invention is characterized in that a control unit of the power-to-gas converter controls the generation of the at least one gas-mixture by the power-to-gas converter, wherein a first threshold value of the concentration of the at least one gas in the gas-mixture is set within the control unit, wherein the generation of the at least one gas-mixture is stopped by the control unit when the measured concentration of the at least one gas in the gas-mixture reaches or exceeds the first threshold value.

In other words, the invention discloses using a feedback signal from the measured gas-mixture ratio to determine when to stop the production of the at least on gas-mixture by the power-to-gas converter. For example, this concludes to instead of imposing a lower current limit, production is allowed to continue until a certain limit or threshold value is reached or exceeded. This allows operation of the power-to-gas converter to a better efficiency, and production losses can thereby be minimized. If the wind turbine and/or the power-to-gas converter is connected to a power grid, it is a viable option to import power from the power grid. For example, this can be used to supplement the power produced from the wind turbine, such that the combined power from the power grid and the wind turbine results in a current for the power-to-gas converter that is able to produce an acceptable and safe to operate gas-mixture.

Preferably, the power-to-gas converter is designed as an electrolyser to generate hydrogen from water and/or the wind turbine is designed as an off-grid wind turbine, whereas an off-grid wind turbine is characterized by not being connected to a main power grid, in which power is supplied by other sources, especially by other non-wind turbine sources. The control unit can be designed to be integrated with the power-to-gas converter or to be installed separately. The gas-mixture consists of at least one gas, preferably a variety of gasses. The measuring unit is designed to measure at least the concentration of one of the gasses of the gas-mixture, and thereby the measuring unit and/or the control unit is able to determine whether the gas-mixture is in a safe to operate condition. Furthermore, the control unit is connected to the measuring unit to transmit data by wire or wirelessly. The control unit is designed to set at least one first threshold value for a measured concentration of the at least one gas in the gas-mixture. If a measured concentration of the at least one gas in the gas-mixture reaches or exceeds its threshold value, the control unit stops the generation of the at least one gas-mixture by the power-to-gas converter.

The stopping of the generation of the at least one gas-mixture can be achieved by various means which are described in detail in future paragraphs.

The method of the invention is especially advantageous because it enables the generation of the at least one gas-mixture by the power-to-gas converter in a safely manner by measuring the concentration of at least one gas in the gas-mixture, wherein a first threshold value of the concentration of the at least one gas in the gas-mixture is set within the control unit, wherein the generation of the at least one gas-mixture is stopped by the control unit when the measured concentration of the at least one gas in the gas-mixture reaches or exceeds the first threshold value.

The power-to-gas converter may be provided with power by the wind turbine, wherein the control unit is designed to monitor the provided power, wherein a second threshold value of the provided power is set within the control unit, wherein the generation of the at least one gas-mixture is stopped when a determined second threshold value is reached or undercut. Additional to the first threshold value for the concentration of at least one gas of the gas-mixture, the setting of a second threshold value for the provided power to the power-to-gas converter is an advantageous design of the method of the invention. As described before, a lower limit of the provided power as the second threshold value is advantageous to avoid unsafe conditions of the at least one gas-mixture and/or the power-to-gas converter. Thereby the two threshold values can enable a dual protection for the method of the invention and the power-to-gas converter.

The measuring unit of the power-to-gas converter may determine the concentration of at least one gas in the gas-mixture within an outgoing gas path of the power-to-gas converter. Furthermore, the outgoing gas path can be designed as an exhaust gas path of the power-to-gas converter. The outgoing gas path can be designed as an exhaust gas path of a cathode side of the power-to-gas converter, of an anode side of the power-to-gas converter and/or of a common exhaust gas path of the power-to-gas converter. The measuring of the concentration of at least one gas in the gas-mixture within an outgoing gas path is an advantageous design since an unsafe condition within the at least one gas-mixture can be directly measured, and as a consequence, the generation of the at least one gas-mixture by the power-to-gas converter can be stopped.

The generation of the at least one gas-mixture may be stopped by the control unit by disconnecting a powerline of the power-to-gas converter for providing power to the power-to-gas converter and/or by closing off a fluid infeed path of the power-to-gas converter for providing fluid to the power-to-gas converter. As described before, the stopping of the generation of the at least one gas-mixture can be achieved by various means. For example, the stopping of the generation of the at least one gas-mixture is achieved by the control unit by disconnecting a power-line to the power-to-gas converter and/or by closing off a fluid infeed path of the power-to-gas converter. In the example of the power-to-gas converter being an electrolyser to generate hydrogen from water, the generation can be stopped by disconnecting the power to the electrolyser and/or by shutting off the infeed line of water to the electrolyser. This can be achieved by commonly known means as valves, switches and circuits within the control unit.

The method may further comprise a storing of power in a power storage unit of the power-to-gas converter, wherein the power storage unit is electrically connected to the wind turbine and the power-to-gas converter, especially in between the wind turbine and the power-to-gas converter. A power storage is an advantageous addition to the power-to-gas converter and the method of the invention since a power storage enables a more efficient use of the power-to-gas converter. The power storage may be used as a backup power storage for safely stopping and/or ramping up the generation of the at least one gas-mixture by the power-to-gas converter. Furthermore, the power storage allows to overcome drops of provided power, especially below a second threshold value, for a certain amount of time, wherein the duration is specified by the amount of power stored or storable in the power storage. In other words, a power storage enables a sufficient amount of power to be stored in the power storage to safely stop and/or ramp up the generation of the at least one gas-mixture by the power-to-gas converter as well as the amount of power fed to the power-to-gas converter being kept constant to insure a safe operation mode for the power-to-gas converter.

A power state of the power storage unit may be measured by a measuring unit of the power storage unit of the power-to-gas converter, wherein the control unit controls the generation of the at least one gas-mixture by the power-to-gas converter in accordance to the measured power state. It is an additional advantageous feature of the method of the invention to measure a power state of the power storage in order to control the generation of the at least one gas-mixture by the power-to-gas converter in accordance to the measured power state. As described before, a power storage in combination with a measured power state enables a sufficient amount of power to be stored in the power storage to safely stop and/or ramp up the generation of the at least one gas-mixture by the power-to--as converter as well as the amount of power fed to the power-to-gas converter to be kept constant to insure a safe operation mode for the power-to-gas converter.

The method may further comprise a storing of the at least one generated gas-mixture in a gas storage unit, wherein the gas storage unit is connected to the power-to-gas converter to receive the at least one generated gas-mixture. A gas storage unit is an advantageous addition to the method and the power-to-gas converter of the invention, because the gas storage enables the storing of the at least one generated gas-mixture. Furthermore, the gas storage allows for an advantageous measuring of the concentration of at least one gas in the gas-mixture. The gas storage further allows for a higher volume of gas-mixture to be stored and especially therefore for a less sensitive change in the concentration of at least one gas in the gas-mixture. For example, when the concentration of at least one gas in the generated gas-mixture slowly starts to rise, the gas storage, its volume to store the gas and/or already existing gas-mixture in the gas storage act as a buffer, which decreases the overall concentration of at least one gas in the gas-mixture in the tank in comparison to the concentration of the one gas in the currently generated gas-mixture. Thereby, the method of the invention is less sensitive, and the generation of the at least one gas-mixture is more stable.

A gas level of the gas storage unit may be measured by a measuring unit of the gas storage unit, wherein the control unit controls the generation of the at least one gas-mixture by the power-to-gas converter in accordance to the measured gas level. It is an additional advantageous feature of the method of the invention to measure a gas level of the gas storage in order to control the generation of the at least one gas-mixture by the power-to-gas converter in accordance to the measured gas level. The gas storage in combination with a measured gas level enables an efficient generation of the at least one gas-mixture by the power-to-gas converter as well as a buffer for the concentration of the at least one gas in the gas-mixture in order to insure a safe operation mode for the power-to-gas converter.

According to a second aspect of the invention, the initially stated object is solved by a power-to-gas converter comprising a measuring unit and a control unit. The power-to-gas converter is designed to implement a method according to the first aspect of the invention. With the power-to-gas converter described, all the advantages already outlined with respect to the method of the invention according to the first aspect of the invention are obtained. An electrolyser may be used as the power-to-gas converter to generate hydrogen from water.

According to a third aspect of the invention, the initially stated object is solved by a wind turbine comprising a power-to-gas converter, wherein the wind turbine is electrically connected to the power-to-gas converter. The power-to-gas converter is designed according to the second aspect of the invention. With the wind turbine described, all the advantages already outlined with respect to the power-to-gas converter according to the second aspect of the invention and the method of the invention according to the first aspect of the invention are obtained. Preferably, the wind turbine is providing the power-to-gas converter with power. The wind turbine may be designed as an off-grid wind turbine. An off-grid wind turbine is characterized by not being connected to a main power grid, in which power is supplied by other sources, especially by other non-wind turbine sources.

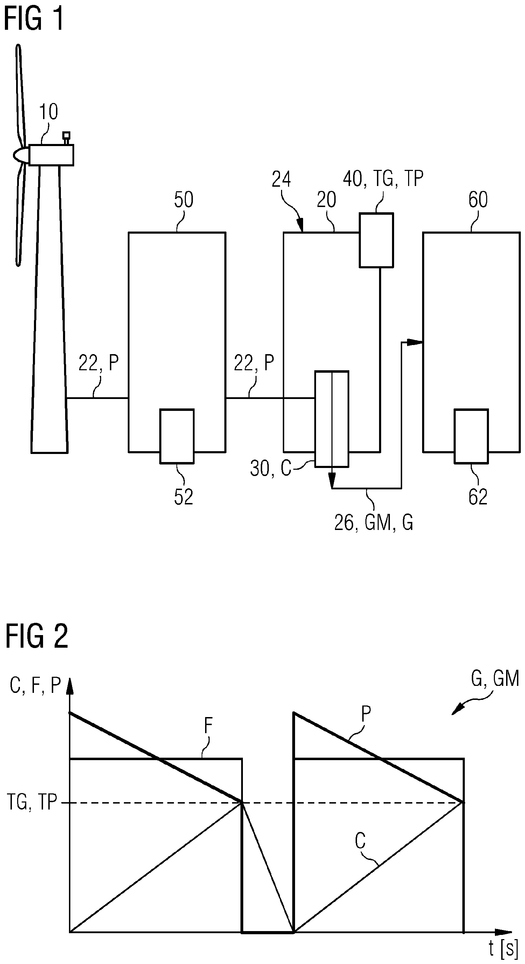

Further advantages, features and details of the invention unfold from the following description, in which by reference to drawings Figs. 1 and 2, embodiments of the present invention are described in detail. Thereby, the features from the claims as well as the features mentioned in the description can be essential for the invention as taken alone or in an arbitrary combination.

In the drawings, there is schematically shown:
FIG. 1 a schematic illustration of a first embodiment of a wind turbine and a power-to-gas converter with a power storage unit and a gas storage unit according to the invention; and
FIG. 2 a schematic graph of the concentration of a gas of the gas-mixture, fluid and power provided to the power-to-gas converter over time.

Same objects in Figs. 1 and 2 are labeled with the same reference number. The objects are shown in a schematic manner, and their specific dimensions are exemplary and may be enlarged for ease of reference only.

FIG. 1 shows a schematic illustration of a first embodiment of a wind turbine 10 and a power-to-gas converter 20 with a power storage unit 50 and a gas storage unit 60 according to the invention. The power-to-gas converter 20 is electrically connected via the power storage 50 to the wind turbine 10, wherein the power-to-gas converter 20 generates one gas-mixture GM, wherein a measuring unit 30 of the power-to-gas converter 20 measures a concentration C of one gas G in the gas-mixture GM and wherein a control unit 40 of the power-to-gas converter 20 controls the generation of the one gas-mixture GM by the power-to-gas converter 20. A first threshold value TG of the concentration C of the at least one gas G in the gas-mixture GM is set within the control unit 40, wherein the generation of the at least one gas-mixture GM is stopped by the control unit 40 when the measured concentration C of the at least one gas G in the gas-mixture GM reaches or exceeds the first threshold value TG. The power-to-gas converter 20 is provided with power P by the wind turbine 10, wherein the control unit 40 is designed to monitor the provided power P, wherein a second threshold value TP of the provided power P is set within the control unit 40, wherein the generation of the at least one gas-mixture GM is stopped when a determined second threshold value TP is reached or undercut. The measuring unit 30 of the power-to-gas converter 20 determines the concentration C of at least one gas in the gas-mixture GM within an outgoing gas path 26 of the power-to-gas converter 20. A storing of power P is enabled by a power storage unit 50 of the power-to-gas converter 20, wherein the power storage unit 50 is electrically connected in between the wind turbine 10 and the power-to-gas converter 20. A power state of the power storage unit 50 is measured by a measuring unit 52 of the power storage unit 50, wherein the control unit 40 controls the generation of the at least one gas-mixture GM by the power-to-gas converter 20 in accordance to the measured power state. A storing of the generated gas-mixture GM is enabled by a gas storage unit 60 of the power-to-gas converter 20, wherein the gas storage unit 60 is connected to the power-to-gas converter 20 to receive the generated gas-mixture GM. A gas level of the gas storage unit 60 is measured by a measuring unit 62 of the gas storage unit 60, wherein the control unit 40 controls the generation of the at least one gas-mixture GM by the power-to-gas converter 20 in accordance to the measured gas level.

FIG. 2 shows a schematic graph of the concentration C of a gas G of the gas-mixture GM, fluid F and power P provided to the power-to-gas converter 20 (not shown) over time. The generation of the at least one gas-mixture GM is stopped by the control unit 40 (not shown) when a determined second threshold value TP is reached or undercut and/or when the measured concentration C of the at least one gas G in the gas-mixture GM reaches or exceeds the first threshold value TG. The generation of the at least one gas-mixture GM is stopped by the control unit 40 (not shown) by disconnecting a powerline 22 (not shown) of the power-to-gas converter 20 (not shown) for providing power P to the power-to-gas converter 20 (not shown) and/or by closing off a fluid infeed path 24 (not shown) of the power-to-gas converter 20 (not shown) for providing fluid F to the power-to-gas converter 20 (not shown).

## Claims

1. Method for operating a power-to-gas converter (20) with a wind turbine (10), the power-to-gas converter (20) being electrically connected to the wind turbine (10), wherein the power-to-gas converter (20) generates at least one gas-mixture (GM), wherein a measuring unit (30) of the power-to-gas converter (20) measures a concentration (C) of at least one gas (G) in the gas-mixture (GM),
**characterized in that**,
a control unit (40) of the power-to-gas converter (20) controls the generation of the at least one gas-mixture (GM) by the power-to-gas converter (20), wherein a first threshold value (TG) of the concentration (C) of the at least one gas (G) in the gas-mixture (GM) is set within the control unit (40), wherein the generation of the at least one gas-mixture (GM) is stopped by the control unit (40) when the measured concentration (C) of the at least one gas (G) in the gas-mixture (GM) reaches or exceeds the first threshold value (TG).

2. Method according to claim 1,
**characterized in that**,
the power-to-gas converter (20) is provided with power (P) by the wind turbine (10), wherein the control unit (40) is designed to monitor the provided power (P), wherein a second threshold value (TP) of the provided power (P) is set within the control unit (40), wherein the generation of the at least one gas-mixture (GM) is stopped when a determined second threshold value (TP) is reached or undercut.

3. Method according to any of the previous claims, **characterized in that**,
the measuring unit (30) of the power-to-gas converter (20) determines the concentration (C) of at least one gas in the gas-mixture (GM) within an outgoing gas path (26) of the power-to-gas converter (20).

4. Method according to any of the previous claims, **characterized in that**,
the generation of the at least one gas-mixture (GM) is stopped by the control unit (40) by disconnecting a powerline (22) of the power-to-gas converter (20) for providing power (P) to the power-to-gas converter (20) and/or by closing off a fluid infeed path (24) of the power-to-gas converter (20) for providing fluid (F) to the power-to-gas converter (20).

5. Method according to any of the previous claims, **characterized in that**,
the method further comprises a storing of power (P) in a power storage unit (50) of the power-to-gas converter (20), wherein the power storage unit (50) is electrically connected to the wind turbine (10) and the power-to-gas converter (20), especially in between the wind turbine (10) and the power-to-gas converter (20).

6. Method according to claim 5,
**characterized in that**,
a power state of the power storage unit (50) is measured by a measuring unit (52) of the power storage unit (50), wherein the control unit (40) controls the generation of the at least one gas-mixture (GM) by the power-to-gas converter (20) in accordance to the measured power state.

7. Method according to any of the previous claims, **characterized in that**,
the method further comprises a storing of the at least one generated gas-mixture (GM) in a gas storage unit (60) of the power-to-gas converter (20), wherein the gas storage unit (60) is connected to the power-to-gas converter (20) to receive the at least one generated gas-mixture (GM).

8. Method according to claim 7,
**characterized in that**,
a gas level of the gas storage unit (60) is measured by a measuring unit (62) of the gas storage unit (60), wherein the control unit (40) controls the generation of the at least one gas-mixture (GM) by the power-to-gas converter (20) in accordance to the measured gas level.

9. Power-to-gas converter (20) comprising a measuring unit (30) and a control unit (40),
**characterized in that**,
the power-to-gas converter (20) is designed to implement a method according to one of the previous claims 1 - 8.

10. Power-to-gas converter (20) according to claim 9, **characterized in that**,
an electrolyser is used as the power-to-gas converter (20) to generate hydrogen from water.

11. Wind turbine (10) comprising a power-to-gas converter (20), wherein the wind turbine (10) is electrically connected to the power-to-gas converter (20),
**characterized in that**,
the power-to-gas converter (20) is designed according to claim 9 or 10.

12. Wind turbine (10) according to claim 11,
**characterized in that**,
the wind turbine (10) is designed as an off-grid wind turbine (10).
